# EUROPÄISCHE PATENTSCHRIFT

(11) **EP 3 972 866 B1**
(45) Veröffentlichungstag und Bekanntmachung des Hinweises auf die Patenterteilung: **03.08.2022**
(21) Anmeldenummer: 20730191.2
(22) Anmeldetag: 13.05.2020
(51) Int. Cl.: B60K 6/48, B60W 10/02, B60W 10/06, B60W 10/08, B60W 20/19, B60W 20/40, B60W 30/18

(54) **VERFAHREN ZUM BETREIBEN EINER ANTRIEBSEINRICHTUNG FÜR EIN KRAFTFAHRZEUG SOWIE ENTSPRECHENDE ANTRIEBSEINRICHTUNG**
METHOD FOR OPERATING A DRIVE DEVICE FOR A MOTOR VEHICLE AND CORRESPONDING DRIVE DEVICE
PROCÉDÉ POUR FAIRE FONCTIONNER UN DISPOSITIF D'ENTRAÎNEMENT CONÇU POUR UN VÉHICULE AUTOMOBILE, ET DISPOSITIF D'ENTRAÎNEMENT CORRESPONDANT

(30) Priorität: 22.05.2019 DE 102019207483
(43) Veröffentlichungstag der Anmeldung: 30.03.2022
(73) Patentinhaber: Audi AG, 85045 Ingolstadt (DE)
(72) Erfinder: HALL, Matthew David, 71672 Marbach am Neckar (DE); SCHIEDT, Guido, 71397 Leutenbach (DE); ZEYER, Andreas, 70499 Stuttgart (DE)
(74) Vertreter: Dietz, Christopher Friedrich
(86) Internationale Anmeldenummer: PCT/EP2020/063296
(87) Internationale Veröffentlichungsnummer: WO 2020/234078

(56) Entgegenhaltungen:
- DE-A1-102006 040 339
- DE-A1-102017 203 623
- US-A1- 2013 297 105
- US-A1- 2019 009 781

## Beschreibung

Die Erfindung betrifft ein Verfahren zum Betreiben einer Antriebseinrichtung für ein Kraftfahrzeug, wobei die Antriebseinrichtung wenigstens eine Brennkraftmaschine, eine mit der Brennkraftmaschine antriebstechnisch gekoppelte oder koppelbare elektrische Maschine und eine Anfahrkupplung aufweist, über die die Brennkraftmaschine und die elektrische Maschine antriebstechnisch an eine Abtriebswelle der Antriebseinrichtung angeschlossen sind. Die Erfindung betrifft weiterhin eine Antriebseinrichtung für ein Kraftfahrzeug.

Aus dem Stand der Technik ist beispielsweise die Druckschrift DE 10 2017 203 623 A1 bekannt. Diese beschreibt ein Verfahren zum Durchführen eines Startvorgangs eines Kraftfahrzeugs mit einem Hybridantriebsstrang umfassend eine Abtriebswelle, ein Anfahrelement, sowie einen Verbrennungsmotor mit einer Abtriebswelle und eine elektrische Maschine, die mit der Abtriebswelle des Verbrennungsmotors verbindbar ist, wobei beim Startvorgang zum Vorspannen des Verbrennungsmotors die elektrische Maschine generatorisch betrieben wird.

Weiterhin ist aus dem Stand der Technik die Druckschrift US 2013/0297105 A1 bekannt. Diese beschreibt ein Hybridfahrzeug, mit einer Brennkraftmaschine, einer über eine erste Kupplung an die Brennkraftmaschine gekoppelte elektrische Maschine, ein über eine zweite Kupplung mit der elektrischen Maschine gekoppeltes Übersetzungsgetriebe und ein Steuergerät. Das Steuergerät ist dazu ausgebildet, die Brennkraftmaschine mittels einer von mehreren Startsequenzen zu starten, wobei die Startsequenz die elektrische Maschine, die erste Kupplung und die zweite Kupplung steuert. Die Startsequenz wird in Abhängigkeit einer Eingangsdrehzahl des Übersetzungsgetriebes und einer Fahreranforderung ausgewählt.

Es ist Aufgabe der Erfindung, ein Verfahren zum Betreiben einer Antriebseinrichtung für ein Kraftfahrzeug vorzuschlagen, welches gegenüber bekannten Verfahren Vorteile aufweist, insbesondere auf besonders effiziente Art und Weise sehr schnell ein hohes Antriebsdrehmoment an der Abtriebswelle bereitstellt.

Dies wird erfindungsgemäß mit einem Verfahren zum Betreiben einer Antriebseinrichtung für ein Kraftfahrzeug mit den Merkmalen des Anspruchs 1 erreicht. Dabei ist vorgesehen, dass in einer Anfahrbetriebsart der Antriebseinrichtung die Brennkraftmaschine bei vollständig geöffneter Anfahrkupplung unbefeuert betrieben und mittels der elektrischen Maschine auf eine Anfahrdrehzahl geschleppt wird, die größer als eine Leerlaufdrehzahl der Brennkraftmaschine ist, wobei nach Erreichen der Anfahrdrehzahl die Brennkraftmaschine befeuert betrieben und die Anfahrkupplung geschlossen wird.

Das Verfahren dient für das Betreiben der Antriebseinrichtung, welche Bestandteil des Kraftfahrzeugs ist oder zumindest sein kann. Die Antriebseinrichtung dient dem Antreiben des Kraftfahrzeugs, insoweit also dem Bereitstellen eines auf das Antreiben des Kraftfahrzeugs gerichteten Antriebsdrehmoments. Zum Erzeugen des Antriebsdrehmoments verfügt die Antriebseinrichtung über die Brennkraftmaschine und die elektrische Maschine, welche zumindest zeitweise das Antriebsdrehmoment gemeinsam bereitstellen. Zeitweise kann es jedoch ebenso vorgesehen sein, nur die Brennkraftmaschine und nicht die elektrische Maschine und/oder nur die elektrische Maschine und nicht die Brennkraftmaschine zum Bereitstellen des Antriebsdrehmoments heranzuziehen.

Die elektrische Maschine ist mit der Brennkraftmaschine antriebstechnisch gekoppelt oder zumindest koppelbar. In ersterem Fall ist die elektrische Maschine insbesondere starr und/oder permanent mit der Brennkraftmaschine verbunden. Beispielsweise ist hierbei die elektrische Maschine unmittelbar mit einer Ausgangswelle der Brennkraftmaschine gekoppelt und bevorzugt koaxial zu ihr angeordnet. Es kann jedoch auch vorgesehen sein, dass die elektrische Maschine über ein Zwischengetriebe an die Ausgangswelle antriebstechnisch angeschlossen ist, wobei das Zwischengetriebe eine von 1 verschiedene Übersetzung aufweist.

Im Falle der mit der Brennkraftmaschine gekoppelten elektrischen Maschine sind die Brennkraftmaschine und die elektrische Maschine gemeinsam an die Anfahrkupplung angeschlossen und mittels dieser mit der Abtriebswelle koppelbar. In einer ersten Schalteinstellung der Anfahrkupplung sind insoweit die Brennkraftmaschine und die elektrische Maschine gemeinsam von der Abtriebswelle entkoppelt, wohingegen sie in einer zweiten Schalteinstellung der Anfahrkupplung gemeinsam mit der Abtriebswelle gekoppelt sind.

Es kann jedoch auch vorgesehen sein, dass die elektrische Maschine mit der Brennkraftmaschine lediglich koppelbar ist. Hierzu ist die elektrische Maschine beispielsweise über eine Trennkupplung an die Brennkraftmaschine beziehungsweise ihre Ausgangswelle angeschlossen. Besonders bevorzugt ist die elektrische Maschine mit einer Zwischenwelle antriebstechnisch gekoppelt, insbesondere starr und/oder permanent, besonders bevorzugt über das Zwischengetriebe. Die Zwischenwelle ist beispielsweise einerseits über die Trennkupplung an die Brennkraftmaschine und andererseits über die Anfahrkupplung an die Abtriebswelle der Antriebseinrichtung angeschlossen.

Analog zu den vorstehenden Ausführungen ist die Abtriebswelle bei Vorliegen der ersten Schalteinstellung der Anfahrkupplung von der Zwischenwelle entkoppelt und bei Vorliegen der zweiten Schalteinstellung mit ihr gekoppelt. Bei geschlossener Anfahrkupplung, also bei Vorliegen der zweiten Schalteinstellung, ist insoweit zumindest die elektrische Maschine mit der Abtriebswelle antriebstechnisch gekoppelt. Ist zusätzlich die Trennkupplung zwischen der Brennkraftmaschine der elektrischen Maschine zumindest teilweise oder vollständig geschlossen, so ist zusätzlich auch die Brennkraftmaschine mit der Abtriebswelle der Antriebseinrichtung antriebstechnisch gekoppelt.

Die Anfahrkupplung liegt antriebstechnisch zwischen der Brennkraftmaschine und der elektrischen Maschine einerseits und der Abtriebswelle der Antriebseinrichtung andererseits vor. Die Abtriebswelle ist vorzugsweise mit wenigstens einem Rad des Kraftfahrzeugs, besonders bevorzugt mit mehreren Rädern des Kraftfahrzeugs, antriebstechnisch gekoppelt, beispielsweise über ein Schaltgetriebe beziehungsweise Gangwechselgetriebe. Das Schaltgetriebe dient dem Einstellen einer aus mehreren Übersetzungen ausgewählten Übersetzung zwischen der Abtriebswelle und dem wenigstens einen Rad des Kraftfahrzeugs. Das bedeutet, dass das Schaltgetriebe mehrere Übersetzungen aufweist, aus welchen eine ausgewählt und an dem Schaltgetriebe eingestellt wird, sodass die eingestellte Übersetzung nachfolgend zwischen der Abtriebswelle und dem wenigstens einen Rad vorliegt.

Die Antriebseinrichtung kann nun beispielsweise in einer Leerlaufbetriebsart betrieben werden. In dieser ist die Anfahrkupplung geöffnet beziehungsweise vollständig geöffnet, liegt also in ihrer ersten Schalteinstellung vor. Entsprechend sind sowohl die Brennkraftmaschine als auch die elektrische Maschine vollständig von der Abtriebswelle entkoppelt. In der Leerlaufbetriebsart wird die Brennkraftmaschine bei einer Leerlaufdrehzahl befeuert betrieben. Das bedeutet, dass der Brennkraftmaschine Kraftstoff zugeführt und die Brennkraftmaschine derart eingestellt wird, dass sie ein Drehmoment erzeugt, welches einem Schleppmoment der Brennkraftmaschine bei der jeweiligen vorliegenden Drehzahl der Brennkraftmaschine entspricht. Insoweit bleibt die Drehzahl der Brennkraftmaschine konstant oder zumindest nahezu konstant.

Die Drehzahl der Brennkraftmaschine wird auf die Leerlaufdrehzahl eingestellt, insbesondere wird sie auf die Leerlaufdrehzahl geregelt. Unter der Leerlaufdrehzahl ist eine Drehzahl der Brennkraftmaschine zu verstehen, welche größer ist als eine Minimaldrehzahl der Brennkraftmaschine und derart gewählt ist, dass ein ruhiger Lauf der Brennkraftmaschine und gleichzeitig eine geringe Geräuschentwicklung sowie ein geringer Kraftstoffverbrauch vorliegen. Die Minimaldrehzahl hingegen ist diejenige Drehzahl, ab welcher die Brennkraftmaschine ohne ein extern bereitgestelltes Drehmoment betrieben werden kann, also ab welcher die Brennkraftmaschine selbsttätig und ohne Einfluss des externen Drehmoments ihre Drehzahl weiter erhöhen kann. Die Leerlaufdrehzahl wird üblicherweise in einem Stand des Kraftfahrzeugs, also bei einer Geschwindigkeit von null, an der Antriebseinrichtung eingestellt beziehungsweise zum Betreiben der Antriebseinrichtung verwendet.

Soll hingegen das Kraftfahrzeug möglichst rasch beschleunigen, so wird die Anfahrbetriebsart an der Antriebseinrichtung eingestellt. Die Anfahrbetriebsart realisiert eine sogenannte Launch Control des Kraftfahrzeugs, welche insbesondere eine maximale und/oder eine besonders effektive Beschleunigung des Kraftfahrzeugs bewirkt. In der Anfahrbetriebsart ist die Anfahrkupplung geöffnet, nämlich vollständig geöffnet, sodass die Brennkraftmaschine und die elektrische Maschine vollständig von der Abtriebswelle entkoppelt sind. Ist die Anfahrkupplung bei Einleitung der Anfahrbetriebsart noch geschlossen oder zumindest teilweise geschlossen, so wird sie vollständig geöffnet.

Ist die Anfahrkupplung vollständig geöffnet, so wird die Brennkraftmaschine mittels der elektrischen Maschine auf die Anfahrdrehzahl geschleppt, wobei sie gleichzeitig unbefeuert betrieben wird. Unter dem unbefeuerten Betreiben ist ein Betreiben der Brennkraftmaschine ohne Kraftstoffzufuhr zu verstehen. Für das unbefeuerte Betreiben wird insoweit die Kraftstoffzufuhr zu der Brennkraftmaschine unterbrochen. Während des unbefeuerten Betriebs findet in der Brennkraftmaschine keine Verbrennung des Kraftstoffs statt.

Das Schleppen der Brennkraftmaschine auf die Anfahrdrehzahl erfolgt somit ausschließlich mittels der elektrischen Maschine, welcher hierzu elektrische Energie beispielsweise aus einem Energiespeicher des Kraftfahrzeugs beziehungsweise der Antriebseinrichtung zugeführt wird. Die Anfahrdrehzahl ist größer als die Leerlaufdrehzahl der Brennkraftmaschine, beispielsweise ist die Anfahrdrehzahl um einen Faktor von mindestens 2 größer als die Leerlaufdrehzahl. Besonders bevorzugt ist die Anfahrdrehzahl um einen Faktor von mindestens 5, mindestens 7,5 oder mindestens 10 größer als die Leerlaufdrehzahl.

Hat die Brennkraftmaschine die Anfahrdrehzahl erreicht, entspricht also ihre momentane Drehzahl der Anfahrdrehzahl, so wird die Brennkraftmaschine befeuert betrieben und die Anfahrkupplung geschlossen. Erst nach dem Erreichen der Anfahrdrehzahl wird also die Brennkraftmaschine von dem unbefeuerten Betrieb auf den befeuerten Betrieb umgeschaltet. Erst nach diesem Umschalten wird von der Brennkraftmaschine das Anfahrdrehmoment zumindest teilweise bereitgestellt. Hierzu wird zusätzlich die Anfahrkupplung geschlossen. Diese Vorgehensweise ist äußerst energieeffizient und zudem für einen Insassen des Kraftfahrzeugs komfortabel, weil das unbefeuerte Betreiben der Brennkraftmaschine und ihr Beschleunigen mittels der elektrischen Maschine mit einer lediglich geringen Geräuschentwicklung einhergeht und deutlich geräuscharmer und vibrationsärmer erfolgt als ein befeuertes Beschleunigen der Brennkraftmaschine bis auf die Anfahrdrehzahl.

Üblicherweise wird die Anfahrbetriebsart aus der Leerlaufbetriebsart eingeleitet, also die Antriebseinrichtung unmittelbar aus der Leerlaufbetriebsart in die Anfahrbetriebsart umgeschaltet. In der Leerlaufbetriebsart wird die Brennkraftmaschine befeuert betrieben, wohingegen in der Anfahrbetriebsart zunächst der unbefeuerte Betrieb der Brennkraftmaschine vorgesehen ist. Entsprechend wird bei dem Umschalten von der Leerlaufbetriebsart in die Anfahrbetriebsart die Brennkraftmaschine von dem befeuerten Betrieb in den unbefeuerten Betrieb umgeschaltet und gleichzeitig das Schleppen der Brennkraftmaschine auf die Anfahrdrehzahl mittels der elektrischen Maschine eingeleitet. Die elektrische Maschine wird dabei derart betrieben, dass trotz des Umschaltens der Brennkraftmaschine von dem befeuerten auf den unbefeuerten Betrieb keine Reduzierung der Drehzahl auftritt, sondern dass die Drehzahl mittels der elektrischen Maschine ausgehend von der Leerlaufdrehzahl kontinuierlich bis auf die Anfahrdrehzahl erhöht wird. Hierdurch werden die vorstehend bereits genannten Vorteile erzielt.

Beispielsweise ist es vorgesehen, die Anfahrbetriebsart der Antriebseinrichtung einzuleiten, sobald eine Betriebsbremse des Kraftfahrzeugs aktiviert und ein Gaspedal des Kraftfahrzeugs betätigt wurde. Das unbefeuerte Betreiben der Brennkraftmaschine und ihr Schleppen auf die Anfahrdrehzahl mittels der elektrischen Maschine erfolgt also bei aktivierter Betriebsbremse, sodass das Kraftfahrzeug im Stillstand verbleibt. Auch nach dem Erreichen der Anfahrdrehzahl bleibt die Anfahrkupplung zunächst geöffnet, sodass das Kraftfahrzeug weiterhin im Stillstand verbleibt. Es kann vorgesehen sein, dass die Brennkraftmaschine weiterhin unbefeuert betrieben und mittels der elektrischen Maschine auf der Anfahrdrehzahl gehalten wird.

Es kann jedoch auch vorgesehen sein, dass die Brennkraftmaschine nach dem Erreichen der Anfahrdrehzahl von dem unbefeuerten Betrieb auf den befeuerten Betrieb umgeschaltet wird. Besonders bevorzugt wird die Anfahrkupplung erst dann geschlossen, wenn die Betriebsbremse des Kraftfahrzeugs gelöst wird, also beispielsweise ein Bremspedal des Kraftfahrzeugs nicht länger betätigt wird. Bevorzugt wird die Anfahrkupplung unmittelbar bei dem Lösen der Betriebsbremse geschlossen, sodass das von der Brennkraftmaschine bereitgestellte Drehmoment an der Abtriebswelle als Antriebsdrehmoment anliegt und das Kraftfahrzeug beschleunigt.

Eine Weiterbildung der Erfindung sieht vor, dass das befeuerte Betreiben der Brennkraftmaschine unmittelbar nach dem Erreichen der Anfahrdrehzahl eingeleitet wird. Hierauf wurde vorstehend bereits hingewiesen. Besonders bevorzugt bleibt die Anfahrkupplung auch nach dem Erreichen der Anfahrdrehzahl und dem Einleiten des befeuerten Betreibens der Brennkraftmaschine zunächst geschlossen, insbesondere bis die Betriebsbremse des Kraftfahrzeugs gelöst wird beziehungsweise vollständig gelöst ist. Durch das Einleiten des befeuerten Betreibens unmittelbar nach dem Erreichen der Anfahrdrehzahl wird sichergestellt, dass mittels der Brennkraftmaschine bei dem Schließen der Anfahrkupplung unmittelbar ein großes Antriebsdrehmoment bereitgestellt wird.

Eine Weiterbildung der Erfindung sieht vor, dass mit dem Einleiten des befeuerten Bertreibens der Brennkraftmaschine mittels der elektrischen Maschine ein Drehmoment erzeugt wird, dass einem von der Brennkraftmaschine bereitgestellten Drehmoment in seiner Größe entspricht und ihm entgegengerichtet ist. Mit dem Aufnehmen des befeuerten Betreibens wird die Brennkraftmaschine bevorzugt derart eingestellt, dass sie ein Drehmoment abgibt. In anderen Worten ist das von der Brennkraftmaschine erzeugte Drehmoment größer als das Reibdrehmoment der Brennkraftmaschine bei der momentan vorliegenden Drehzahl, insbesondere der Anfahrdrehzahl.

Um die Brennkraftmaschine dennoch auf der Anfahrdrehzahl zu halten, wird die elektrische Maschine derart angesteuert, dass das dem Drehmoment der Brennkraftmaschine entgegengerichtete Drehmoment erzeugt. In anderen Worten wird die elektrische Maschine derart eingestellt, dass die Drehzahl der Brennkraftmaschine auf der Anfahrdrehzahl gehalten wird. Beispielsweise weisen die Brennkraftmaschine und die elektrische Maschine hierzu dieselbe Nennleistung auf. Bevorzugt wird die Brennkraftmaschine derart eingestellt, dass sie das bei der momentanen Drehzahl, insbesondere der Anfahrdrehzahl, maximal mögliche Drehmoment bereitstellt. Falls das mittels der elektrischen Maschine bereitstellbare Drehmoment kleiner ist als dieses, so wird besonders bevorzugt das Drehmoment der Brennkraftmaschine auf das maximal mittels der elektrischen Maschine bereitstellbare Drehmoment eingestellt.

Anders ausgedrückt wird die Brennkraftmaschine bereits auf das Bereitstellen eines großen Antriebsdrehmoments vorbereitet, welchem zunächst mithilfe der elektrischen Maschine entgegengewirkt wird. Die elektrische Maschine wird also für ein Vorspannen der Brennkraftmaschine verwendet. Dies führt zu einer äußerst raschen Bereitstellung des Antriebsdrehmoments, sodass eine hohe Beschleunigung des Kraftfahrzeugs erzielt wird.

Eine Weiterbildung der Erfindung sieht vor, dass das Bereitstellen des Drehmoments mittels der elektrischen Maschine durch ein generatorisches Betreiben der elektrischen Maschine erfolgt, und bei dem generatorischen Betreiben von der elektrischen Maschine bereitgestellte elektrische Energie zwischengespeichert oder in Wärme umgesetzt wird. Vorstehend wurde bereits erwähnt, dass die elektrische Maschine an einen Energiespeicher elektrisch angeschlossen sein kann, welche der Zwischenspeicherung elektrischer Energie dient. Die elektrische Maschine ist insoweit einerseits mittels elektrischer Energie betreibbar, die dem Energiespeicher entnommen wird. Umgekehrt kann dem Energiespeicher elektrische Energie zugeführt werden, welche mithilfe der elektrischen Maschine bereitgestellt wird.

Nach dem Einleiten des befeuerten Betriebs der Brennkraftmaschine in der Anfahrbetriebsart nimmt die elektrische Maschine das von der Brennkraftmaschine erzeugte Drehmoment auf. Hierbei wird die mechanische Energie der Brennkraftmaschine in elektrische Energie umgesetzt. Die elektrische Energie wird beispielsweise in dem Energiespeicher zwischengespeichert. Besonders vorteilhaft ist es vorgesehen, zum Schleppen der Brennkraftmaschine auf die Anfahrdrehzahl die elektrische Maschine mit elektrischer Energie zu betreiben, die dem Energiespeicher entnommen wird. Das bedeutet, dass der Ladestand des Energiespeichers sinkt. Während des generatorischen Betreibens der elektrischen Maschine zum Halten der Brennkraftmaschine auf der Anfahrdrehzahl wird dem Energiespeicher wieder elektrische Energie zugeführt, sodass die zuvor entnommene elektrische Energie zumindest teilweise oder sogar vollständig ersetzt wird.

Es kann jedoch auch vorgesehen sein, dass die von der elektrischen Maschine bereitgestellte elektrische Energie unmittelbar in Wärme umgesetzt wird, beispielsweise durch ein Kurzschließen der elektrischen Maschine. Eine derartige Vorgehensweise kann insbesondere umgesetzt werden, sofern der Energiespeicher vollständig gefüllt ist, also keine weitere elektrische Energie aufnehmen kann. Beispielsweise wird während des befeuerten Betreibens der Brennkraftmaschine die mittels der elektrischen Maschine bereitgestellte elektrische Energie solange in den Energiespeicher eingebracht, bis dieser vollständig gefüllt ist. Nachfolgend wird die elektrische Energie in Wärme umgewandelt, insbesondere bis die Anfahrkupplung geschlossen wird. Eine derartige Vorgehensweise erlaubt stets ein Vorspannen der Brennkraftmaschine mithilfe der elektrischen Maschine.

Eine Weiterbildung der Erfindung sieht vor, dass nach dem Einleiten des befeuerten Betreibens der Brennkraftmaschine die Anfahrkupplung geschlossen wird. Die Anfahrkupplung wird also erst nach dem Einleiten des befeuerten Betreibens geschlossen, sodass ein zeitlicher Abstand vorliegt. Hierdurch wird sichergestellt, dass die Brennkraftmaschine bei dem Schließen der Anfahrkupplung ein hinreichend großes Drehmoment bereitstellt. Besonders bevorzugt wird die Anfahrkupplung erst dann geschlossen, wenn die Brennkraftmaschine ein vorgegebenes Solldrehmoment bereitstellt, welchem mithilfe der elektrischen Maschine entgegengewirkt wird. Das Solldrehmoment kann beispielsweise dem maximal möglichen Drehmoment bei der Anfahrdrehzahl entsprechen. Wiederum stellt die beschriebene Vorgehensweise eine rasche Beschleunigung des Kraftfahrzeugs sicher.

Eine Weiterbildung der Erfindung sieht vor, dass bei dem Schließen der Anfahrkupplung die elektrische Maschine deaktiviert oder ab dem Schließen der Anfahrkupplung mittels der elektrischen Maschine ein das Drehmoment der Brennkraftmaschine unterstützendes Drehmoments erzeugt wird. Das Deaktivieren der elektrischen Maschine erfolgt insbesondere dann, falls zuvor mittels der elektrischen Maschine das dem Drehmoment der Brennkraftmaschine entgegenwirkende Drehmoment erzeugt wurde. Aufgrund des Abschaltens der elektrischen Maschine wird das Antriebsdrehmoment der Antriebseinrichtung, welches an der Abtriebswelle anliegt, in diesem Fall allein mittels der Brennkraftmaschine bereitgestellt.

Alternativ kann es vorgesehen sein, das von der Brennkraftmaschine erzeugte Drehmoment mithilfe der elektrischen Maschine zu unterstützen, sodass sich das an der Abtriebswelle anliegende Antriebsdrehmoment aus dem von der Brennkraftmaschine erzeugten Drehmoment und dem von der elektrischen Maschine erzeugten Drehmoment zusammensetzt. Besonders bevorzugt wird mithilfe der Brennkraftmaschine das maximal bei der Anfahrdrehzahl mögliche Drehmoment erzeugt, wohingegen die elektrische Maschine derart betrieben wird, dass das an der Abtriebswelle anliegende Antriebsdrehmoment einem Sollantriebsdrehmoment entspricht. Das Sollantriebsdrehmoment wird beispielsweise von einem Fahrer des Kraftfahrzeugs oder einer Fahrerassistenzeinrichtung des Kraftfahrzeugs vorgegeben. Selbstverständlich kann es auch vorgesehen sein, die elektrische Maschine zum Erzeugen ihres maximalen Drehmoments anzusteuern, sodass an der Abtriebswelle das maximal erzielbare Antriebsdrehmoment anliegt. Hierdurch kann eine besonders hohe Leistungsabgabe erzielt werden.

Eine Weiterbildung der Erfindung sieht vor, dass die Anfahrdrehzahl gleich derjenigen Drehzahl gewählt wird, bei welcher die Brennkraftmaschine ein Maximaldrehmoment bereitstellt. Das Maximaldrehmoment entspricht dem über alle möglichen Drehzahlen der Brennkraftmaschine hinweg größten Drehmoment der Brennkraftmaschine. Es ist nicht mit dem maximalen Drehmoment gleichzusetzen, unter welchem das größte Drehmoment bei einer bestimmten Drehzahl zu verstehen ist. Selbstverständlich fallen jedoch das maximale Drehmoment und das Maximaldrehmoment für diejenige Drehzahl zusammen, entsprechen also einander, bei welcher das Maximaldrehmoment an der Brennkraftmaschine abrufbar ist. Mit der beschriebenen Vorgehensweise wird das Erzielen eines besonders hohen Antriebsdrehmoments an der Abtriebswelle sichergestellt.

Eine Weiterbildung der Erfindung sieht vor, dass die Anfahrdrehzahl gleich einer Drehzahl gewählt wird, bei welcher ein maximales Drehmoment der Brennkraftmaschine einem maximal mittels der elektrischen Maschine bereitstellbaren Drehmoment entspricht. In diesem Fall entspricht das maximale Drehmoment demjenigen Drehmoment, welches bei der Anfahrdrehzahl mithilfe der Brennkraftmaschine maximal erzielbar ist. Das maximale Drehmoment kann, muss jedoch nicht, dem Maximaldrehmoment entsprechen. Das maximale Drehmoment soll nun dem maximal mittels der elektrischen Maschine bereitstellbaren Drehmoment entsprechen, damit das von der Brennkraftmaschine erzeugte Drehmoment mittels der elektrischen Maschine ausgleichbar ist, sodass das beschriebene Vorspannen der Brennkraftmaschine möglich ist.

Aus diesem maximalen Drehmoment, welches dem maximal mittels der elektrischen Maschine bereitstellbaren Drehmoment entspricht, wird die Drehzahl ermittelt, bei welcher dieses maximale Drehmoment vorliegt beziehungsweise das größtmögliche Drehmoment der Brennkraftmaschine darstellt. Anschließend wird die Anfahrdrehzahl gleich dieser Drehzahl gesetzt. Hierdurch wird sichergestellt, dass trotz der Limitierung durch die elektrische Maschine ein hohes Antriebsdrehmoment erzielt wird.

Eine Weiterbildung der Erfindung sieht vor, dass antriebstechnisch zwischen der Brennkraftmaschine und der elektrischen Maschine eine Trennkupplung vorliegt, die zum Anschleppen der Brennkraftmaschine mittels der elektrischen Maschine geschlossen wird. Auf die Trennkupplung wurde vorstehend bereits hingewiesen. In einer ersten Schalteinstellung ist die Trennkupplung geöffnet, sodass die Brennkraftmaschine von der elektrischen Maschine antriebstechnisch separiert ist. In einer zweiten Schalteinstellung ist die Trennkupplung hingegen geschlossen, sodass die Brennkraftmaschine mit der elektrischen Maschine antriebstechnisch gekoppelt ist, vorzugsweise starr. Um das Anschleppen der Brennkraftmaschine mittels der elektrischen Maschine zu ermöglichen, wird die Trennkupplung geschlossen. Dies ist insbesondere der Fall, falls die Antriebseinrichtung zuvor in der Leerlaufbetriebsart betrieben wurde, in welcher die Trennkupplung geöffnet ist. Die Trennkupplung ermöglicht eine besonders hohe Energieeffizienz der Antriebseinrichtung.

Die Erfindung betrifft weiterhin eine Antriebseinrichtung für ein Kraftfahrzeug, insbesondere zur Durchführung des Verfahrens gemäß den Ausführungen im Rahmen dieser Beschreibung, wobei die Antriebseinrichtung wenigstens eine Brennkraftmaschine, eine mit der Brennkraftmaschine antriebstechnisch gekoppelte oder koppelbare elektrische Maschine und eine Anfahrkupplung aufweist, über die die Brennkraftmaschine und die elektrische Maschine antriebstechnisch an eine Abtriebswelle der Antriebseinrichtung angeschlossen sind. Dabei ist vorgesehen, dass die Antriebseinrichtung dazu ausgebildet ist, in einer Anfahrbetriebsart der Antriebseinrichtung die Brennkraftmaschine bei vollständig geöffneter Anfahrkupplung unbefeuert zu betreiben und mittels der elektrischen Maschine auf eine Anfahrdrehzahl zu schleppen, die größer als eine Leerlaufdrehzahl der Brennkraftmaschine ist, wobei nach Erreichen der Anfahrdrehzahl die Brennkraftmaschine befeuert betrieben und die Anfahrkupplung geschlossen wird.

Auf die Vorteile einer derartigen Ausgestaltung der Antriebseinrichtung sowie einer derartigen Vorgehensweise wurde bereits hingewiesen. Sowohl die Antriebseinrichtung als auch das Verfahren zu ihrem Betreiben können gemäß den Ausführungen im Rahmen dieser Beschreibung weitergebildet sein, sodass insoweit auf diese verwiesen wird.

Die Erfindung betrifft selbstverständlich auch ein Kraftfahrzeug mit einer solchen Antriebseinrichtung.

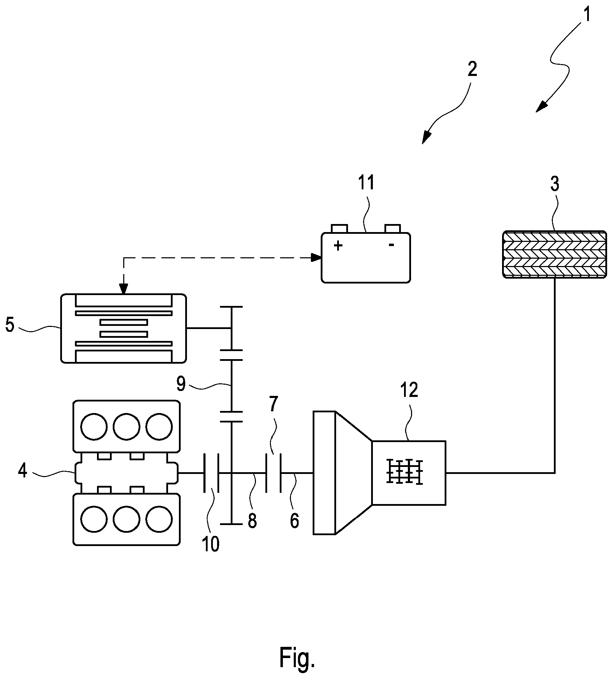

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Antriebseinrichtung für ein Kraftfahrzeug.

Die Figur zeigt eine schematische Darstellung eines Kraftfahrzeugs 1, welches eine Antriebseinrichtung 2 und wenigstens ein mittels der Antriebseinrichtung 2 antreibbares Rad 3 aufweist. Die Antriebseinrichtung 1 verfügt über eine Brennkraftmaschine 4 und eine elektrische Maschine 5, die zumindest zeitweise mit einer Abtriebswelle 6 der Antriebseinrichtung 2 antriebstechnisch gekoppelt sind. In dem hier dargestellten Ausführungsbeispiel ist die Abtriebswelle 6 über eine Anfahrkupplung 7 antriebstechnisch an eine Zwischenwelle 8 angeschlossen, welche starr und permanent mit der elektrischen Maschine 5 gekoppelt ist.

Beispielsweise ist die elektrische Maschine 5 über ein Zwischengetriebe 9 an die Zwischenwelle 8 angebunden. Die Brennkraftmaschine 4 ist hingegen über eine Trennkupplung 10 an die Zwischenwelle 8 antriebstechnisch angeschlossen. Bei geöffneter Trennkupplung 10 ist insoweit die Zwischenwelle 8 vollständig von der Brennkraftmaschine 4 entkoppelt, bei geschlossener Trennkupplung 10 starr mit ihr verbunden. Analog hierzu ist die Abtriebswelle 6 bei geöffneter Anfahrkupplung 7 vollständig von der Zwischenwelle 8 entkoppelt und bei geschlossener Anfahrkupplung 7 starr mit ihr gekoppelt. Die elektrische Maschine 5 ist elektrisch an einen Energiespeicher 11 angeschlossen, der zur Zwischenspeicherung von elektrischer Energie dient.

In dem gezeigten Ausführungsbeispiel ist die Abtriebswelle 6 über ein Schaltgetriebe 12 antriebstechnisch an das wenigstens eine Rad 3 des Kraftfahrzeugs 1 angeschlossen. Selbstverständlich kann das Schaltgetriebe 12 auch an anderer Stelle der Antriebseinrichtung 2 vorliegen oder gänzlich entfallen. Ebenso ist es möglich, dass die Anfahrkupplung 7 in das Schaltgetriebe 12 integriert ausgestaltet ist, sodass auch die Abtriebswelle 6 in dem Schaltgetriebe 12 vorliegt, beispielsweise als Vorlegewelle oder dergleichen.

Es ist nun vorgesehen, in einer Anfahrbetriebsart der Antriebseinrichtung 2 die Anfahrkupplung 7 vollständig zu öffnen, sofern sie nicht bereits vollständig geöffnet ist. Nachfolgend wird die Brennkraftmaschine 4 mittels der elektrischen Maschine 5 auf eine Anfahrdrehzahl geschleppt, die größer ist als eine Leerlaufdrehzahl der Brennkraftmaschine 4. Die Brennkraftmaschine 4 wird hierbei unbefeuert betrieben. Das bedeutet, dass in ihr kein Kraftstoff verbrannt wird, insbesondere wird ihr kein Kraftstoff zugeführt. Die elektrische Energie zum Schleppen der Brennkraftmaschine 4 mittels der elektrischen Maschine 5 wird vorzugsweise dem Energiespeicher 11 entnommen.

Nach dem Erreichen der Anfahrdrehzahl wird die Brennkraftmaschine 4 von dem unbefeuerten Betrieb in einen befeuerten Betrieb umgeschaltet. Vorzugsweise wird die Brennkraftmaschine 4 derart eingestellt, dass sie ein Drehmoment von größer als 0 Nm abgibt. Gleichzeitig wird die elektrische Maschine 5 derart angestellt, dass sie ein Drehmoment erzeugt, welches dem Drehmoment der Brennkraftmaschine 4 entgegenwirkt und diesem betragsmäßig entspricht. Entsprechend wird die Drehzahl der Brennkraftmaschine 4 trotz des erzeugten Drehmoments mithilfe der elektrischen Maschine 5 konstant gehalten, nämlich auf der Anfahrdrehzahl.

Zum Beschleunigen des Kraftfahrzeugs 1 wird anschließend die Anfahrkupplung 7 geschlossen, und die elektrische Maschine 5 entweder deaktiviert oder zur Unterstützung des von der Brennkraftmaschine 4 erzeugten Drehmoments eingestellt. In letzterem Fall liegt an der Abtriebswelle 6 ein Antriebsdrehmoment vor, welches von der Brennkraftmaschine 4 und der elektrischen Maschine 5 gemeinsam bereitgestellt wird. Aufgrund des zuvor erfolgten Vorspannens der Brennkraftmaschine 4 kann an der Abtriebswelle sehr schnell ein sehr großes Antriebsdrehmoment bereitgestellt werden.

### BEZUGSZEICHENLISTE:

- 1: Kraftfahrzeug
- 2: Antriebseinrichtung
- 3: Rad
- 4: Brennkraftmaschine
- 5: Elektrische Maschine
- 6: Abtriebswelle
- 7: Anfahrkupplung
- 8: Zwischenwelle
- 9: Zwischengetriebe
- 10: Trennkupplung
- 11: Energiespeicher
- 12: Schaltgetriebe

## Patentansprüche

1. Verfahren zum Betreiben einer Antriebseinrichtung (2) für ein Kraftfahrzeug (1), wobei die Antriebseinrichtung (2) wenigstens eine Brennkraftmaschine (4), eine mit der Brennkraftmaschine (4) antriebstechnisch gekoppelte oder koppelbare elektrische Maschine (5) und eine Anfahrkupplung (7) aufweist, über die die Brennkraftmaschine (4) und die elektrische Maschine (5) antriebstechnisch an eine Abtriebswelle (6) der Antriebseinrichtung (2) angeschlossen sind, **dadurch gekennzeichnet, dass** in einer Anfahrbetriebsart der Antriebseinrichtung (2) die Brennkraftmaschine (4) bei vollständig geöffneter Anfahrkupplung (7) unbefeuert betrieben und mittels der elektrischen Maschine (5) auf eine Anfahrdrehzahl geschleppt wird, die größer als eine Leerlaufdrehzahl der Brennkraftmaschine (4) ist, wobei nach Erreichen der Anfahrdrehzahl die Brennkraftmaschine (4) befeuert betrieben und die Anfahrkupplung (7) geschlossen wird.

2. Verfahren nach Anspruch 1, **dadurch gekennzeichnet, dass** das befeuerte Betreiben der Brennkraftmaschine (4) unmittelbar nach dem Erreichen der Anfahrdrehzahl eingeleitet wird.

3. Verfahren nach einem der vorhergehenden Ansprüche, **dadurch gekennzeichnet, dass** mit dem Einleiten des befeuerten Betreibens der Brennkraftmaschine (4) mittels der elektrischen Maschine (5) ein Drehmoment erzeugt wird, das einem von der Brennkraftmaschine (4) bereitgestellten Drehmoment in seiner Größe entspricht und ihm entgegengerichtet ist.

4. Verfahren nach Anspruch 3, **dadurch gekennzeichnet, dass** das Bereitstellen des Drehmoments mittels der elektrischen Maschine (5) durch ein generatorisches Betreiben der elektrischen Maschine (5) erfolgt und bei dem generatorischen Betreiben von der elektrischen Maschine (5) bereitgestellte elektrische Energie zwischengespeichert oder in Wärme umgesetzt wird.

5. Verfahren nach einem der vorhergehenden Ansprüche, **dadurch gekennzeichnet, dass** nach dem Einleiten des befeuerten Betreibens der Brennkraftmaschine (4) die Anfahrkupplung (7) geschlossen wird.

6. Verfahren nach einem der vorhergehenden Ansprüche, **dadurch gekennzeichnet, dass** bei dem Schließen der Anfahrkupplung (7) die elektrische Maschine (5) deaktiviert oder ab dem Schließen der Anfahrkupplung (7) mittels der elektrischen Maschine (5) ein das Drehmoment der Brennkraftmaschine (4) unterstützendes Drehmoment erzeugt wird.

7. Verfahren nach einem der vorhergehenden Ansprüche, **dadurch gekennzeichnet, dass** die Anfahrdrehzahl gleich der derjenigen Drehzahl gewählt wird, bei welcher die Brennkraftmaschine (4) ein Maximaldrehmoment bereitstellt.

8. Verfahren nach einem der vorhergehenden Ansprüche, **dadurch gekennzeichnet, dass** die Anfahrdrehzahl gleich einer Drehzahl gewählt wird, bei welcher ein maximales Drehmoment der Brennkraftmaschine (4) einem maximal mittels der elektrischen Maschine bereitstellbarem Drehmoment entspricht.

9. Verfahren nach einem der vorhergehenden Ansprüche, **dadurch gekennzeichnet, dass** antriebstechnisch zwischen der Brennkraftmaschine (4) und der elektrischen Maschine (5) eine Trennkupplung (10) vorliegt, die zum Anschleppen der Brennkraftmaschine (4) mittels der elektrischen Maschine (5) geschlossen wird.

10. Antriebseinrichtung (2) für ein Kraftfahrzeug (1), wobei die Antriebseinrichtung (2) wenigstens eine Brennkraftmaschine (4), eine mit der Brennkraftmaschine (4) antriebstechnisch gekoppelte oder koppelbare elektrische Maschine (5) und eine Anfahrkupplung (7) aufweist, über die die Brennkraftmaschine (4) und die elektrische Maschine (5) antriebstechnisch an eine Abtriebswelle (6) der Antriebseinrichtung (2) angeschlossen sind, wobei die Antriebseinrichtung (2) ein Steuermittel, das zur Durchführung des Verfahrens nach einem oder mehreren der vorhergehenden Ansprüche konfiguriert ist, aufweist.

## Claims

1. Method for operating a drive device (2) for a motor vehicle (1), the drive device (2) having at least one internal combustion engine (4), an electric motor (5) which is or can be drivingly coupled to the internal combustion engine (4), and a starting clutch (7), via which the internal combustion engine (4) and the electric motor (5) are drivingly connected to an output shaft (6) of the drive device (2), **characterised in that** in a starting operating mode of the drive device (2) the internal combustion engine (4) is operated without combustion when the starting clutch (7) is fully open and is towed by means of the electric motor (5) to a starting speed which is greater than an idling speed of the internal combustion engine (4), wherein after the starting speed has been reached the internal combustion engine (4) is operated with combustion and the starting clutch (7) is closed.

2. Method according to claim 1, **characterised in that** the operation of the internal combustion engine (4) with combustion is initiated immediately after the starting speed has been reached.

3. Method according to any one of the preceding claims, **characterised in that** with the initiation of the operation of the internal combustion engine (4) with combustion being initiated by means of the electric motor (5), a torque is generated which corresponds in magnitude to a torque provided by the internal combustion engine (4) and is directed counter to it.

4. Method according to claim 3, **characterised in that** the torque is provided by means of the electric motor (5) by means of a regenerative operation of the electric motor (5) and electrical energy provided by the electric motor (5) during the regenerative operation is temporarily stored or converted into heat.

5. Method according to any one of the preceding claims, **characterised in that** after initiation of the operation of the internal combustion engine (4) with combustion, the starting clutch (7) is closed.

6. Method according to any one of the preceding claims, **characterised in that,** when the starting clutch (7) is closed, the electric motor (5) is deactivated or, from the closing of the starting clutch (7), a torque supporting the torque of the internal combustion engine (4) is generated by means of the electric motor (5).

7. Method according to any one of the preceding claims, **characterised in that** the starting speed is selected to be equal to the speed at which the internal combustion engine (4) provides maximum torque.

8. Method according to any one of the preceding claims, **characterised in that** the starting speed is selected to be equal to a speed at which a maximum torque of the internal combustion engine (4) corresponds to a maximum torque that can be provided by means of the electric motor.

9. Method according to any one of the preceding claims, **characterised in that,** in the drive system a decoupling clutch (10) is located between the internal combustion engine (4) and the electric motor (5), which is closed for towing the internal combustion engine (4) by means of the electric motor (5).

10. Drive device (2) for a motor vehicle (1), the drive device (2) having at least one internal combustion engine (4), an electric motor (5) which is or can be drivingly coupled to the internal combustion engine (4), and a starting clutch (7), via which the internal combustion engine (4) and the electric motor (5) are drivingly connected to an output shaft (6) of the drive device (2), the drive device (2) having a control means configured for carrying out the method according to one or more of the preceding claims.

## Revendications

1. Procédé pour faire fonctionner un appareil de propulsion (2) pour un véhicule automobile (1), dans lequel l'appareil de propulsion (2) présente au moins un moteur à combustion interne (4), un moteur électrique (5) couplé ou pouvant être couplé au moteur à combustion interne (4) en termes de technique de propulsion, et un embrayage de démarrage (7) par lequel le moteur à combustion interne (4) et le moteur électrique (5) sont raccordés en termes de technique de propulsion à un arbre de sortie (6) de l'appareil de propulsion (2), **caractérisé en ce que,** dans un mode de fonctionnement de démarrage de l'appareil d'entraînement (2), le moteur à combustion interne (4) fonctionne sans être allumé, l'embrayage de démarrage (7) étant complètement ouvert, et est entraîné au moyen du moteur électrique (5) jusqu'à une vitesse de rotation de démarrage qui est supérieure à une vitesse de rotation à vide du moteur à combustion interne (4), dans lequel, après avoir atteint la vitesse de rotation de démarrage, le moteur à combustion interne (4) fonctionne avec allumage et l'embrayage de démarrage (7) est fermé.

2. Procédé selon la revendication 1, **caractérisé en ce que** le fonctionnement à chaud du moteur à combustion interne (4) est initié directement après que la vitesse de rotation de démarrage a été atteinte.

3. Procédé selon l'une quelconque des revendications précédentes, **caractérisé en ce que** le déclenchement du fonctionnement à chaud du moteur à combustion interne (4) au moyen du moteur électrique (5) génère un couple dont l'amplitude correspond à un couple fourni par le moteur à combustion interne (4) et qui lui est opposé.

4. Procédé selon la revendication 3, **caractérisé en ce que** la mise à disposition du couple au moyen du moteur électrique (5) s'effectue par un fonctionnement en générateur du moteur électrique (5) et **en ce que**, lors du fonctionnement en générateur, l'énergie électrique mise à disposition par le moteur électrique (5) est stockée temporairement ou transformée en chaleur.

5. Procédé selon l'une quelconque des revendications précédentes, **caractérisé en ce qu'**après le déclenchement du fonctionnement à chaud du moteur à combustion interne (4), l'embrayage de démarrage (7) est fermé.

6. Procédé selon l'une quelconque des revendications précédentes, **caractérisé en ce que,** lors de la fermeture de l'embrayage de démarrage (7), le moteur électrique (5) est désactivé ou, à partir de la fermeture de l'embrayage de démarrage (7), un couple assistant le couple du moteur à combustion interne (4) est généré au moyen du moteur électrique (5).

7. Procédé selon l'une quelconque des revendications précédentes, **caractérisé en ce que** la vitesse de rotation de démarrage est choisie égale à la vitesse de rotation à laquelle le moteur à combustion interne (4) fournit un couple maximal.

8. Procédé selon l'une quelconque des revendications précédentes, **caractérisé en ce que** la vitesse de rotation de démarrage est choisie égale à une vitesse de rotation à laquelle un couple maximal du moteur à combustion interne (4) correspond à un couple maximal pouvant être fourni par le moteur électrique.

9. Procédé selon l'une quelconque des revendications précédentes, **caractérisé en ce que,** en termes de technique de propulsion, il existe entre le moteur à combustion interne (4) et le moteur électrique (5) un embrayage de séparation (10) qui est fermé pour remorquer le moteur à combustion interne (4) au moyen du moteur électrique (5).

10. Appareil d'entraînement (2) pour un véhicule automobile (1), dans lequel l'appareil de propulsion (2) présente au moins un moteur à combustion interne (4), un moteur électrique (5) couplé ou pouvant être couplé au moteur à combustion interne (4) en termes de technique d'entraînement et un embrayage de démarrage (7), par l'intermédiaire duquel le moteur à combustion interne (4) et le moteur électrique (5) sont raccordés en termes de technique de propulsion à un arbre de sortie (6) de l'appareil de propulsion (2), dans lequel l'appareil de propulsion (2) présente un moyen de commande qui est configuré pour la mise en oeuvre du procédé selon une quelconque ou plusieurs des revendications précédentes.
